**Europäisches Patentamt**

**European Patent Office**

**Office européen des brevets**

(19)

(11) Veröffentlichungsnummer: **0 266 365 B1**

(12) # EUROPÄISCHE PATENTSCHRIFT

(45) Veröffentlichungstag der Patentschrift:
**20.02.91 Patentblatt 91/08**

(51) Int. Cl.⁵: **G01D 3/04, G01K 7/24,**
**G01L 9/04**

(21) Anmeldenummer: **87901396.9**

(22) Anmeldetag: **19.03.87**

(86) Internationale Anmeldenummer:
**PCT/DE87/00118**

(87) Internationale Veröffentlichungsnummer:
**WO 87/06337 22.10.87 Gazette 87/23**

(54) **SCHALTUNGSANORDNUNG ZUR ERZEUGUNG EINES VON DER TEMPERATUR NICHTLINEAR ABHÄNGIGEN AUSGANGSSIGNALS.**

(30) Priorität: **16.04.86 DE 3612809**

(43) Veröffentlichungstag der Anmeldung:
**11.05.88 Patentblatt 88/19**

(45) Bekanntmachung des Hinweises auf die
Patenterteilung:
**20.02.91 Patentblatt 91/08**

(84) Benannte Vertragsstaaten:
**DE FR GB IT**

(56) Entgegenhaltungen:
**AT-B- 307 079**
**DE-A- 2 507 732**

(73) Patentinhaber: **ROBERT BOSCH GMBH**
**Postfach 50**
**D-7000 Stuttgart 1 (DE)**

(72) Erfinder: **HECHT, Hans**
**Hebichstr. 12**
**D-7015 Korntal (DE)**
Erfinder: **KUHNT, Winfried**
**Rotenwaldstr. 41A**
**D-7000 Stuttgart 1 (DE)**

## Beschreibung

Stand der Technik

Die Erfindung geht aus von einer Schaltungsanordnung nach der Gattung des Hauptanspruchs.

Eine Schaltungsanordnung dieser Art ist bereits aus Seite 365 der Druckschrift "Guidebook of Electronic Circuits", 1974 McGraw-Hill U.S.A., bekannt. Die Schaltungsanordnung ist als Brückenverstärker aufgebaut, bei der eine Widerstandsbrückenschaltung mit zwei temperaturabhängigen Widerständen derart beschaltet ist, daß die temperaturabhängigen Widerstände diagonal gegenüberliegen. Die temperaturabhängige, in der Brückendiagonale anliegende Brückenspannung wird durch einen Operationsverstärker verstärkt, dessen Ausgang über einen Widerstand auf den invertierenden Eingang des Operationsverstärkers und damit in die Widerstandsbrückenschaltung rückgekoppelt ist. Bei hohen Temperaturabweichungen vom Normalzustand weist die Schaltungsanordnung eine merkliche Nichtlinearität auf, die aber bei kleinen Temperaturabweichungen vernachlässigbar ist.

Aus dem DE-GM 81 19 025 ist ein sensor zur Erfassung des Druckes eines Mediums unter Verwendung wenigstens eines seinen Widerstands wert unter Druckeinwirkung ändernden Elementes bekannt. Dieses Element wird vorzugsweise durch eine Widerstandsbrückenschaltung gebildet, deren einzelne Widerstände in Dickschichttechnik durch eine Widerstandspaste gebildet wurden. Das Element ist auf einer durch Druckeinwirkung elastisch verformbaren Unterlage angeordnet, so daß sich bei Druckeinwirkung in der Brückendiagonale ein spannungssignal ergibt. Zur Temperaturkompensation ist es möglich, Widerstandspasten mit unterschiedlichen Temperaturkoeffizienten zu verwenden.

Beim Entwurf von schaltungsanordnungen für die Auswertung von sensorsignalen ist es eine häufig gestellte Aufgabe, geeignete Maßnahmen zur Temperaturkompensation vorzusehen. Üblicherweise wird dabei zunächst der Temperaturgang des Ausgangssignales der schaltungsanordnung errechnet oder aufgezeichnet. Der Temperaturgang läßt sich mathematisch als eine von der Temperatur abhängige Funktion darstellen, die sich wiederum in eine Potenzreihe entwickeln läßt. Für die meisten technischen Anwendungsfälle ist es ausreichend, wenn das lineare Glied des Temperaturganges kompensiert wird, da die Glieder höherer Ordnung gegenüber einer zulässigen Toleranz ausreichend klein sind. Für hochgenaue Anwendungen sind jedoch auch Vorkehrungen zu treffen, um quadratische und manchmal auch höhere Anteile des Temperaturgangs zu kompensieren. Die eigentliche Kompensation geschieht dann allgemein so, daß ein gesondertes, von der Temperatur abhängiges Signal innerhalb der schaltungsanordnung gebildet wird, welches zum Ausgangssignal in geeigneter Weise addiert oder subtrahiert wird.

Der vorliegenden Erfindung liegt dementsprechend die Aufgabe zugrunde, eine schaltungsanordnung zur Erzeugung eines von der Temperatur nichtlinear, insbesondere quadratisch abhängigen Ausgangssignals zu finden, die besonders einfach im Aufbau und daher ohne besondere Maßnahmen platzsparend in nahezu jede andere schaltungsanordnung einbeziehbar ist.

Gelöst wird die Aufgabe durch die Schaltungsanordnung mit den im Hauptanspruch angegebenen Merkmalen.

Vorteile der Erfindung

Die erfindungsgemäße schaltungsanordnung mit den kennzeichnenden Merkmalen des Hauptanspruchs hat gegenüber den aus dem stand der Technik bekannten schaltungsanordnungen den besonderen Vorteil, daß sie allein aus Widerstandselementen besteht und daher besonders einfach in Dickschichtoder Dünnschichttechnik durch Widerstandspasten mit verschiedenen Temperaturkoeffizienten auf einem Träger aufgebracht werden kann. Sie ist daher auch zur Temperaturkompensation bei monolithisch integrierten schaltkreisen verwendbar, wenn diese in Hybridtechnik gleichzeitig mit der erfindungsgemäßen schaltungsanordnung auf einem Träger aufgebracht werden.

Weitere Ausgestaltungen der erfindungsgemäßen schaltungsanordnung sind in den Unteransprüchen angegeben. So ist es besonders vorteilhaft, parallel zur erfindungsgemäßen Brückenschaltung die Serienschaltung von zwei Widerständen vorzusehen, von denen wenigstens einer einen von der Temperatur abhängigen Widerstandswert besitzt. Die Teilerspannung dieser Widerstandsanordnung kann dann mit der Ausgangsspannung der Widerstandsbrückenschaltung addiert werden, vorzugsweise durch einen summierverstärker mit hochohmigem Eingang, wodurch sich eine Ausgangsspannung mit nahezu beliebiger linearer und quadratischer Temperaturabhängigkeit einstellen läßt.

2

Zeichnung

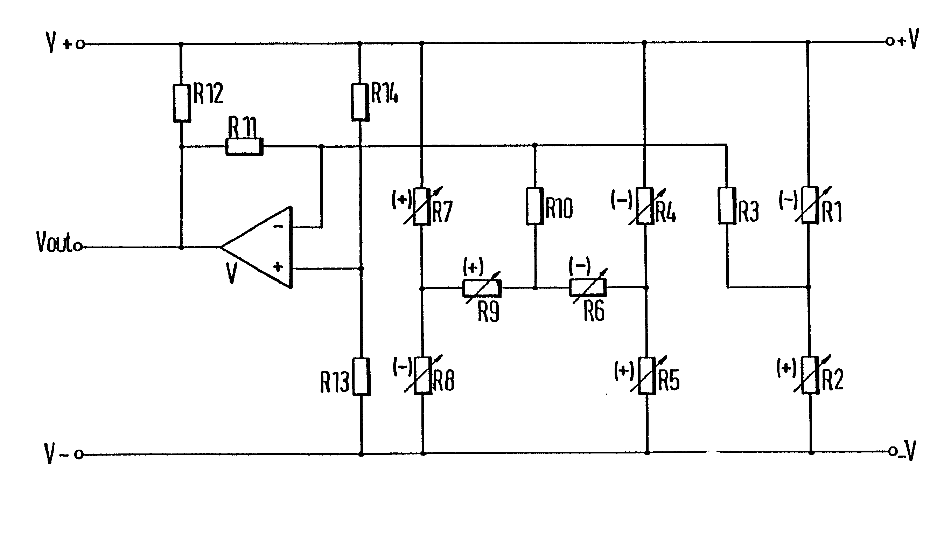

Ein Ausführungsbeispiel der Erfindung ist als schaltbild in der Zeichnung dargestellt und in der nachfolgenden Beschreibung näher erläutert.

Beschreibung des Ausführungsbeispiels

In der einzigen Figur der Zeichnung ist eine schaltungsanordnung dargestellt, die zwischen einer mit $V_+$ bezeichneten Versorgungspannungsleitung und mit einer mit $V_-$ bezeichneten Versorgungsspannungsleitung betrieben wird.

Je drei mal drei Widerstände R1 bis R9 sind in sternschaltung zwischen die $V_+$- und $V_-$-Leitung geschaltet. Die erste Sternschaltung R1, R2, R3 ist über den Widerstand R1 an. die $V_+$- und über den Widerstand R2 an die $V_-$-Leitung gelegt. Die zweite sternschaltung R4, R5, R6 ist über den Widerstand R4 an die $V_+$- und über den Widerstand R5 an die $V_-$-Leitung gelegt. Die dritte sternschaltung R7, R8, R9 schließlich ist über den Widerstand R7 an die $V_+$- und über den Widerstand R8 an die $V_-$-Leitung gelegt. Die Widerstände R6 der zweiten. Sternschaltung und R9 der dritten sternschaltung sind miteinander verbunden und über einen Widerstand R10 an den Widerstand R3 der ersten sternschaltung gelegt. Der Verbindungspunkt der Widerstände R3, R10 führt auf den invertierenden Eingang eines Verstärkers V. Ein Rückkopplungswiderstand R11 ist zwischen den invertierenden Eingang und den Ausgang mit der Klemmenbezeichnung $V_{out}$ des Verstärkers V geschaltet. Ein Widerstand R12 führt von der $V_+$-Leitung zum Ausgang des Verstärkers V. Der nichtinvertierende Eingang des Verstärkers V ist über einen Widerstand R13 zur Ruhestromkompensation an die $V_-$-Leitung gelegt ; ein Widerstand R14 führt zur $V_+$-Leitung.

In der Zeichnung sind weiterhin diejenigen Widerstände gekennzeichnet, die einen bestimmten Temperaturkoeffizienten aufweisen. Und zwar besitzen die Eiderstände R1, R4, R6, R8 einen Temperaturkoeffizienten mit negativem Vorzeichen und die Widerstände R2, R5, R7, R9 Temperaturkoeffizienten mit positivem Vorzeichen.

Diese Maßnahme hat nun den Effekt, daß das Potential der spannung am Verbindungspunkt der Widerstände R1, R2 näherungsweise linear von der temperatur abhängig ist, während das Potential am Verbindungspunkt der Widerstände R6, R9 näherungsweise quadratisch von der Temperatur abhängig ist. Da der Verstärker V in bekannter Weise über die Widerstände R3, R10 und den Rückkopplungswiderstand R11 als Summierverstärker wirkt, ändert sich dementsprechend das Potential an der Klemme $V_{out}$ sowohl linear als auch quadratisch mit der Temperatur.

Durch geeignete Dimensionierung der Widerstände und der einzelnen Temperaturkoeffizienten ist der Fachmann in der Lage, ein von der temperatur abhängiges Signal zu erzeugen, das nahezu beliebig linear und quadratisch von der Temperatur abhängt. Eine mögliche Dimensionierung der gesamten Schaltungsanordnung kann wie folgt angegeben werden : Versorgungsspannungen $V_- = 0$ V und $V_+ = 5$ V
Verstärker V typ TAF 2453 G

| Widerstände | Wert (kΩ) | Temperaturkoeffizient (ppm/k) |
|---|---|---|
| R1 | 4 | − 2000 |
| R2 | 4 | + 1500 |
| R3 | 25 | 0 |
| R4 | 2 | − 2000 |
| R5 | 2 | + 1500 |
| R6 | 4 | − 2000 |
| R7 | 2 | + 1500 |
| R8 | 2 | − 2000 |
| R9 | 4 | + 1500 |
| R10 | 5 | 0 |
| R11 | 70 | 0 |
| R12 | 0,75 | 0 |
| R13 | 5 | 0 |
| R14 | 5 | 0 |

In Dickschichttechnik werden die Widerstände zuerst unterdimensioniert auf einem Keramikträger aufgebracht und anschließend mit Hilfe eines Laserschnittes auf den genauen Wert abgeglichen.

Das Ausführungsbeispiel findet Anwendung bei der Temperaturgangkompensation eines Dickschicht-Druckfühlerelements. Es ist jedoch auch für andere Aufgaben universell einsetzbar.

**Ansprüche**

1. Schaltungsanordnung zur Erzeugung eines von der Temperatur nichtlinear abhängigen Ausgangssignals (Vout) mit einer zwischen zwei Versorgungsspannung führenden Leitungen (V+, V−) angeordneten Widerstandsbrückenschaltung (R4, R5, R7, R8) mit wenigstens einem temperaturabhängigen Widerstand, dadurch gekennzeichnet,

– daß die beiden Zweige der Widerstandsbrückenschaltung jeweils durch die Serienschaltung eines Widerstands mit positivem Temperaturkoeffizienten (R5, R7) und eines Widerstands mit negativem Temperaturkoeffizienten (R4, R8) gebildet sind,

– daß je ein Widerstand mit positivem Temperaturkoeffizienten eines Zweiges und ein Widerstand mit negativem Temperaturkoeffizienten des anderen Zweiges einseitig an eine Versorgungsspannung führende Leitung gelegt ist,

– daß in die Brückendiagonale der Widerstandsbrückenschaltung die Serienschaltung eines Widerstands mit negativem Temperaturkoeffizienten (R6) und eines Widerstands mit positivem Temperaturkoeffizienten (R9) geschaltet ist, und

– daß das Ausgangssignal (Vout) aus dem am Verbindungspunkt der in der Brückendiagonale geschalteten Widerstandsserienschaltung (R6, R9) anliegenden Spannungspotential gebildet ist.

2. Schaltungsanordnung nach Anspruch 1, dadurch gekennzeichnet,

– daß parallel zur Widerstandsbrückenschaltung eine zusätzliche Serienschaltung zweier Widerstände (R1, R2) mit wenigstens einem temperaturabhängigen Widerstand geschaltet ist, und

– daß das Ausgangssignal (Vout) zusätzlich aus dem Spannungspotential am Verbindungspunkt der zusätzlichen Widerstands-Serienschaltung (R1, R2) gebildet ist.

3. Schaltungsanordnung nach Anspruch 2, dadurch gekennzeichnet,

– daß die beiden Spannungspotentiale über einen Summierverstärker (V) addiert sind, und das Ausgangssignal (Vout) aus dem Ausgangssignal des Summierverstärkers (V) gebildet ist.

## Claims

1. Circuit arrangement for generating an output signal (Vout) non-linearly dependent on temperature, having a resistance bridge circuit (R4, R5, R7, R8) arranged between two lines (V$_+$, V$_-$) carrying a supply voltage and having at least one temperature-dependent resistor, characterized in that
– the two arms of the resistance bridge circuit are respectively formed by the series circuit of a resistor with a positive temperature coefficient (R5, R7) and of a resistor with a negative temperature coefficient (R4, R8),
– a resistor with a positive temperature coefficient of one arm and a resistor with a negative temperature coefficient of the other arm is in each case connected on one side to a line carrying the supply voltage,
– the series circuit of a resistor with a negative temperature coefficient (R6) and of a resistor with a positive temperature coefficient (R9) is connected into the bridge diagonal of the resistance bridge circuit, and in that
– the output signal (Vout) is formed from the voltage potential connected to the tie point of the resistor series circuit (R6, R9) connected in the bridge diagonal.

2. Circuit arrangement according to Claim 1, characterized in that
– an additional series circuit of two resistors (R1, R2) having at least one temperature-dependent resistor is connected in parallel with the resistance bridge circuit, and in that
– the output signal (Vout) is additionally formed from the voltage potential at the tie point of the additional resistor series circuit (R1, R2)

3. Circuit arrangement according to Claim 2, characterized in that
– the two voltage potentials are added via a summing amplifier (V), and in that the output signal (Vout) is formed from the output signal of the summing amplifier (V).

## Revendications

1. Circuits-générateurs de signaux de sortie (Vout) dépendant de manière non linéaire de la température, comprenant deux montages en pont de résistances (R4, R5, R7, R8) prévus entre deux lignes d'alimentation en tension (V$_+$, V$_-$) avec au moins une résistance dépendant de la température, circuits caractérisés en ce que :
– les deux branches du montage en pont sont formées respectivement par le montage en série d'une résistance à coefficient de température positif (R5, R7) et d'une résistance à coefficient de température négatif (R4, R8),
– chaque fois une résistance à coefficient de température positif d'une branche et une résistance à coefficient de température négatif d'une autre branche sont reliées d'un côté à une ligne alimentée en tension,
– dans la diagonale du pont du montage en pont de résistances, on a un montage en série formé d'une résistance à coefficient de température négatif (R6) et d'une résistance à coefficient de température positif (R9),
– en ce que le signal de sortie (Vout) est pris sur le point de jonction du montage en série de résistances (R6, R9) de la diagonale du pont.

2. Circuits selon la revendication 1, caractérisés en ce que :
– en parallèle au montage en pont de résistances, on a un montage en série supplémentaire formé de deux résistances (R1, R2) avec au moins une résistance dépendant de la température et,
– le signal de sortie (Vout) est en outre formé du potentiel du point de jonction du montage en série de résistances (R1, R2) supplémentaire.

3. Circuits selon la revendication 2, caractérisés en ce que les deux potentiels sont additionnés par l'intermédiaire d'un amplificateur-additionneur (V) et un signal de sortie (Vout) est formé par le signal de sortie de l'amplificateur-additionneur (V).

EP 0 266 365 B1